# FASCICULE DE BREVET EUROPEEN

(11) **EP 4 638 191 B1**
(45) Date de publication et mention de la délivrance du brevet: **11.11.2026**
(21) Numéro de dépôt: 23841301.7
(22) Date de dépôt: 21.12.2023
(51) Int. Cl.: B60N 2/70, B60N 2/64, B29C 64/00, B29D 99/00, B33Y 80/00

(54) **COUSSIN OBTENU PAR IMPRESSION 3D**
DURCH 3D-DRUCK ERHALTENES KISSEN
CUSHION OBTAINED BY 3D PRINTING

(30) Priorité: 21.12.2022 FR 2214159
(43) Date de publication de la demande: 29.10.2025
(73) Titulaire: Commissariat à l'énergie atomique et aux énergies alternatives (CEA), 75015 Paris (FR); RENAULT S.A.S., 92100 Boulogne-Billancourt (FR)
(72) Inventeur: BOUVIER, Michael, 38000 Grenoble (FR); BRIN, Eric, 78280 GUYANCOURT (FR); GLEYZES, Hervé, 38000 Grenoble (FR); ROY, Jean-Baptiste, 78280 GUYANCOURT (FR)
(74) Mandataire: Ipsilon
(86) Numéro de dépôt international: PCT/FR2023/052088
(87) Numéro de publication internationale: WO 2024/134109

(56) Documents cités:
- DE-A1- 102020 117 309
- US-A1- 2021 069 948

## Description

La présente invention concerne un coussin obtenu par impression 3D
Un tel coussin est particulièrement mais non exclusivement adapté à un siège de véhicule. Généralement, un siège de véhicule comprend une assise et un dossier. Dans certains cas, comme par exemple dans les véhicules de course destinés à rouler sur un circuit, la géométrie de cette assise et de ce dossier peut apparaitre complexe en présentant notamment différentes parois inclinées destinées à maintenir le corps du pilote dans une position la plus stable possible sur son siège. Afin d'améliorer le confort et le maintien de ces pilotes, des coussins souples réalisés par exemple en mousse et entourés par une enveloppe en tissu sont accolés aux différentes parois constituant ledit dossier et ladite assise.

Or, les techniques actuelles de fabrication de ces coussins manquent grandement d'agilité, dans la mesure où elles sont longues à développer et difficiles à personnaliser (ne sont conçues que pour un seul type de siège et un profil d'utilisateur). En effet, il suffit que le siège change légèrement de forme et/ou de dimensions pour que ces techniques ne soient plus adaptées. Il faut alors modifier les différents équipements mis en œuvre dans ces techniques pour obtenir le produit souhaité, avec la bonne géométrie et les bonnes dimensions. Ces modifications d'équipements qui sont lourdes à réaliser, demandent des modifications ou des créations d'outillage spécifiques, sont consommatrices de temps et engendrent donc des coûts et des délais supplémentaires.

Afin de s'affranchir de tous ces inconvénients, une tendance actuelle consiste à fabriquer ces coussins au moyen d'une impression 3D, qui est une technique de fabrication simple, automatisée et rapide. En effet, il suffit de concevoir le produit et de programmer dans l'imprimante 3D les caractéristiques des différentes couches à placer dans le coussin, pour obtenir un coussin avec les propriétés souhaitées. Il est important de rappeler qu'un intérêt majeur d'une conception paramétrique en vue d'impression 3D, est que l'objet à fabriquer, dans le cas présent un coussin, est réalisé en continu et d'une seule traite d'une extrémité à l'autre, sans avoir à fabriquer séparément différents éléments constitutifs de cet objet puis à les assembler de la manière voulue. Avec l'impression 3D, selon les volumes et quantités produits, on réduit donc considérablement les temps et coûts d'assemblage d'un produit équivalent fabriqué de façon habituelle.

Par exemple, le document brevet US 2021/0069948 A1 divulgue un coussin monolithique selon le préambule de la revendication 1 et pouvant être obtenu au moyen d'une impression 3D.

Un coussin selon l'invention est obtenu au moyen d'une impression 3D, tout en présentant des qualités de confort et de maintien au moins équivalentes à celles des coussins obtenus avec des techniques traditionnelles de fabrication.

L'invention a pour objet un coussin monolithique.

Selon l'invention, le coussin comprend au moins trois couches distinctes :
- une couche avant de contact comportant une seule couche matérialisant un quadrillage de plusieurs cellules unitaires pleines, reliées les unes aux autres par des bras laissant apparaitre des espaces libres entre lesdites cellules unitaires pleines, et
- une couche intermédiaire molle comportant une seule couche possédant un quadrillage de plusieurs cellules unitaires creuses, reliées les unes aux autres par des bras laissant apparaitre des espaces libres entre lesdites cellules unitaires creuses, ladite couche intermédiaire étant au contact de la couche avant de telle sorte que chaque cellule unitaire pleine vienne en correspondance et en appui contre une cellule unitaire creuse, et
- une couche arrière de confort constituant le cœur du coussin et comportant une superposition d'au moins deux couches de cellules ajourées, ladite couche arrière étant au contact de la couche intermédiaire de sorte que ladite couche intermédiaire soit comprise entre la couche avant et la couche arrière.

Schématiquement, la couche avant de contact est destinée à venir au contact d'une personne, en lieu et place du textile habituel, et les couches intermédiaire et arrière assurent le comportement mécanique global (dont le confort) dudit coussin, la couche intermédiaire constituant une couche d'accrochage pour la couche avant. La présence de cellules unitaires pleines dans la couche avant se justifie car ce sont ces cellules qui vont venir au contact d'une partie du corps d'un individu. Elles doivent donc présenter une certaine douceur de contact, contrairement à des cellules creuses qui sont moins agréables au contact. Avantageusement, le quadrillage de la couche avant est sensiblement plan. Le côté moelleux du coussin est conféré par la couche intermédiaire et la couche arrière, la couche intermédiaire assurant la transition entre la couche avant et la couche arrière. Le fait qu'une cellule creuse de la couche intermédiaire vienne en correspondance et au contact d'une cellule pleine de la couche avant permet d'assurer un contact stable entre lesdites deux couches et donc d'empêcher un glissement relatif entre lesdites deux couches dès qu'une partie du corps d'un individu vient au contact de ladite couche avant. Le nombre de couches constituant la couche arrière est fonction de l'épaisseur et des propriétés de déformation recherchées pour le coussin. Les trois couches constitutives du coussin peuvent être planes, ou présenter au moins une pliure de manière à présenter deux tronçons consécutifs inclinés l'un par rapport à l'autre. Préférentiellement, les épaisseurs des couches avant et intermédiaires sont inférieures à 1cm, et de façon encore plus avantageuse sont inférieures à 0.5cm. La couche arrière peut atteindre plusieurs centimètres. Avantageusement, les trois couches constitutives du coussin possèdent des contours de même dimension. Les trois couches constitutives du coussin présentent chacune un maximum de passages et d'ouverture pour alléger ledit coussin, et pour assurer un dépoussiérage dudit coussin en fin de fabrication et assurer un traitement final de finition couleur ou autre. Les ouvertures entre les couches présentent avantageusement une capacité de ventilation passive supérieure à un siège automobile habituel. Le terme « monolithique » attribué au coussin, signifie que le coussin est fabriqué en une seule matière et au moyen d'un seul et même procédé.

Selon une caractéristique possible de l'invention, les cellules unitaires pleines de la couche avant ont une forme en quadrilatère.

Selon une caractéristique possible de l'invention, les cellules unitaires pleines de la couche avant présente chacune une ouverture centrale. Les ouvertures centrales contribuent à alléger un peu plus le coussin et à faciliter l'évacuation de la poussière en fin de fabrication dudit coussin.

Selon une caractéristique possible de l'invention, les cellules unitaires creuses de la couche intermédiaire sont de forme elliptique et ont des dimensions inférieures ou égales à celles des cellules unitaires pleines de la couche avant. Une telle interaction des cellules permet d'assurer un bon continuum entre la couche avant et la couche intermédiaire sans risque de provoquer un glissement relatif entre les deux couches lorsqu'une partie du corps d'un individu vient au contact du coussin.

Selon une caractéristique possible de l'invention, la couche arrière de confort comprend des cellules ajourées en forme d'octaèdre tronqué, ou correspondant au comportement mécanique souhaité. Ce type de cellules confère à la couche arrière, une bonne aptitude à la déformation, accroissant ainsi le confort du coussin.

Selon une caractéristique possible de l'invention, la couche arrière de confort comprend une première face qui est au contact de la couche intermédiaire molle et une deuxième face qui est sensiblement parallèle à ladite première face et qui est destinée à venir au contact d'une surface extérieure, ladite deuxième face possédant des excroissances de matière pour accroitre la surface de contact entre le coussin et ladite surface extérieure. Ces excroissances de matière ont pour seul but d'accroitre la surface de contact entre le coussin et une surface extérieure sur laquelle est destiné à venir se fixer ledit coussin. Cette surface extérieure peut par exemple être une surface d'assise ou de dossier d'un siège automobile. Ces excroissances de matière émergent de façon très modérée de la deuxième face de la couche arrière du coussin de façon à ne pas agrandir ou à agrandir de moins de 1% les dimensions du coussin. Ces excroissances peuvent être remplacées par une surface pleine et continue. Lesdites excroissances présentent en revanche une construction avantageusement plus légère que cette solution de surface pleine, et permet un meilleur dépoussiérage du coussin après réalisation.

Selon une caractéristique possible de l'invention, la deuxième face possède une gorge creuse délimitée par une paroi continue et destinée à l'insertion d'un matériau d'accrochage. Le matériau d'accrochage peut par exemple être constitué par un adhésif ou un matériau de type Velcro. Avantageusement, cette gorge forme une boucle fermée, et de façon encore plus avantageuse une boucle de forme rectangulaire. Cette gorge s'étend dans une région périphérique du coussin. Selon une variante de réalisation de l'invention, la gorge peut être conçue de façon discontinue, en relation avec les zones d'accroche souhaitées.

Selon une caractéristique possible de l'invention, la couche avant de contact, la couche intermédiaire molle et la couche arrière de confort possèdent des contours de même dimension, le coussin comportant une couche de maintien sous la forme d'une bande latérale entourant les trois couches superposées constitutives du coussin, la largeur de ladite bande correspondant à la hauteur de superposition desdites trois couches constitutives dudit coussin. Cette couche de maintien contribue à octroyer au coussin une bonne tenue d'ensemble, et à circonscrire de potentielles extensions accidentelles des trois couches constitutives du coussin à l'intérieur dudit coussin 100. Ces extensions sont inhérentes à la fabrication du coussin et ne sont pas recherchées. La couche de maintien retient ces extensions afin de rendre le coussin plus doux au toucher.

Selon une caractéristique possible de l'invention, la couche de maintien est constituée d'une multiplicité de mailles. Préférentiellement, ces mailles ont une forme en losange ou elliptique. Ces mailles délimitent des ouvertures, et contribuent à alléger le coussin par rapport à une couche de maintien pleine et continue. Ces ouvertures contribuent aussi à améliorer le dépoussiérage de l'ensemble après fabrication.

Enfin, la fabrication de toutes ces couches par le même procédé sans assemblage permet d'être plus avantageux écologiquement, notamment pour le recyclage du coussin global.

Selon une caractéristique possible de l'invention, les bras avant reliant les cellules unitaires pleines de la couche avant ne sont pas rectilignes et présentent une courbure ou au moins une pliure, de façon à pouvoir se déployer lorsque ladite couche avant est déformée. De cette manière, lorsque la couche avant va se déformer sous l'effet par exemple d'une personne qui va s'asseoir sur le coussin, les bras vont pouvoir accompagner cette déformation en se déployant. Lorsque les bras vont se déployer ils vont avoir tendance à adopter un profil rectiligne. Ces bras avant confèrent de la souplesse à la couche avant, notamment dans le plan contenant les cellules unitaires pleines.

L'invention a pour autre objet un siège de véhicule comprenant une assise et un dossier.

Selon l'invention, au moins un coussin conforme à l'invention, est fixé à ladite assise et audit dossier. Les coussins selon l'invention ont été développés pour être avantageusement fixés à un siège de véhicule, en particulier à un siège baquet de véhicule de sport

L'invention a pour autre objet un véhicule comprenant au moins un siège conforme à l'invention.

Un coussin selon l'invention présente l'avantage de pouvoir être fabriqué de façon rapide, automatisée et précise, tout en présentant les propriétés requises pour assurer un bon confort et un bon maintien à un individu, qui serait par exemple assis sur un siège de véhicule auquel aura été préalablement fixé ledit coussin. Il a de plus l'avantage de pouvoir être fabriqué avec un grand éventail de matériaux grâce à l'impression 3D, et donc de présenter des caractéristiques structurelles variées voire nouvelles, adaptées aux matériaux utilisés. Un tel coussin présente également l'avantage de pouvoir apparaitre avec des motifs et des couleurs variés, en fonction des matériaux utilisés dans l'impression 3D, permettant par exemple d'améliorer le rendu visuel de l'intérieur d'un véhicule si ledit coussin était fixé à un siège dudit véhicule.

On donne ci-après une description détaillée d'un mode de réalisation préféré d'un coussin selon l'invention en se référant aux figures suivantes, dans lesquelles :
[Fig. 1] La figure 1 est une vue en perspective d'un siège de véhicule comprenant plusieurs coussins selon l'invention,
[Fig. 2] La figure 2 est une vue en éclaté d'un premier mode de réalisation d'un coussin selon l'invention,
[Fig. 3] La figure 3 est une vue en perspective d'une couche arrière du premier mode de réalisation d'un coussin selon l'invention,
[Fig. 4] La figure 4 est une vue en perspective d'un deuxième mode de réalisation d'un coussin selon l'invention.
[Fig. 5] La figure 5 est une vue en perspective d'une zone d'un coussin selon l'invention, montrant les caractéristiques structurelles de la couche avant et de la couche de maintien.

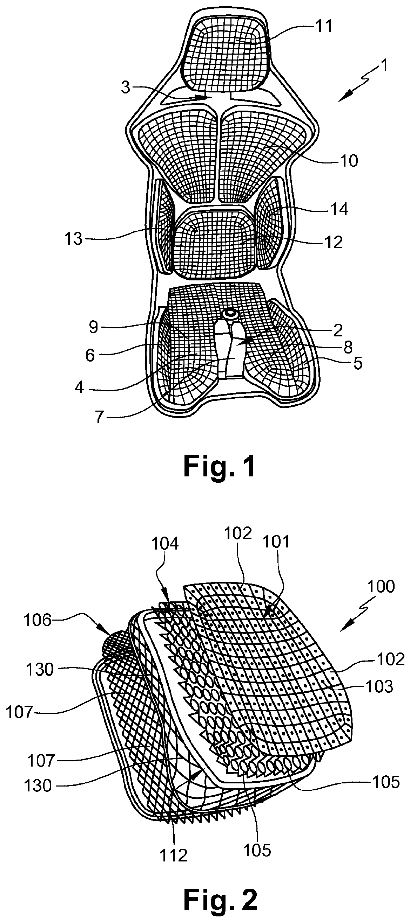

En se référant à la figure 1, un siège 1 de véhicule selon l'invention est un siège de véhicule de course comprenant une assise 2 et un dossier 3. Cette assise 2 présente un tronçon 4 central plan, de forme sensiblement rectangulaire, et deux tronçons latéraux 5, 6 relevés prenant naissance sur deux bords parallèles du tronçon central 4, ledit tronçon central 4 présentant une échancrure avant 7. Les deux tronçons latéraux relevés 5, 6 empêchent qu'un pilote qui serait assis sur le tronçon central 4 de l'assise 2 ne glisse par inadvertance sur les côtés de ladite assise 2, par exemple lorsque le véhicule emprunte une courbe. L'échancrure avant 7 permet la fixation d'une ceinture de sécurité, et les deux portions 8, 9 du tronçon central 4 situés de chaque côté de l'échancrure 7 servent de support aux jambes dudit pilote. Le dossier 3 présente un tronçon principal 10 contre lequel est destiné à venir en appui le dos du pilote, un appui-tête 11 placé au-dessus dudit tronçon principal 10, et une paroi de liaison 12 située entre le tronçon principal 10 du dossier 3 et le tronçon central 4 de l'assise 2. La paroi de liaison 12 est délimitée par deux bords latéraux inclinés 13, 14, chacun desdits deux bords latéraux inclinés 13, 14 étant situé dans le prolongement d'un tronçon latéral 5, 6 relevé de l'assise 2. De la même manière que lesdits deux tronçons latéraux 5, 6, les deux bords latéraux inclinés 13, 14 empêchent qu'un pilote qui serait assis sur le siège 1 en étant en appui contre le dossier 3 ne glisse par inadvertance sur les côtés dudit dossier 3, par exemple lorsque le véhicule emprunte une courbe.

La particularité du siège 1 précédemment décrit, est qu'il comprend plusieurs coussins 100 fabriqués en impression 3D encore appelée fabrication additive simultanée, lesdits coussins 100 remplaçant la mousse, l'enveloppe en tissu entourant ladite mousse des coussins fabriqués traditionnellement, ainsi que les moyens d'assemblage ou de renforcement de ladite mousse et de ladite enveloppe en tissu.

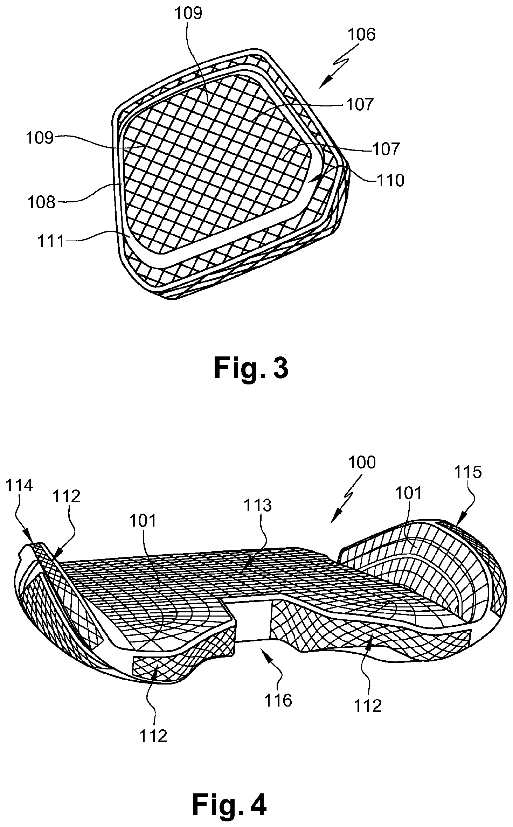

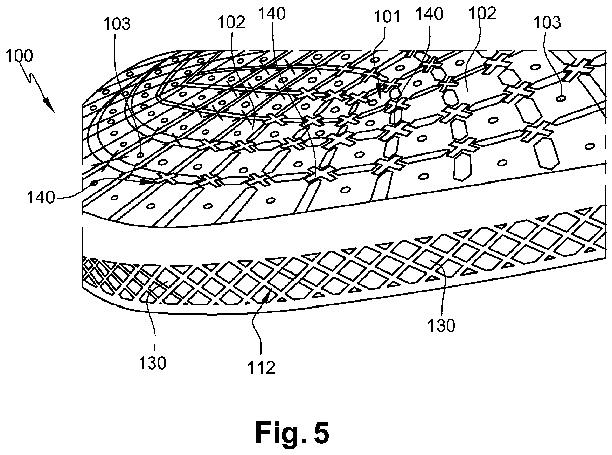

En se référant aux figures 2, 3, 5, un premier mode de réalisation d'un coussin 100 selon l'invention et qui est fabriqué en impression 3D, est destiné à venir se fixer à l'appui-tête 11 du siège 1. Ce coussin 100 comprend quatre couches distinctes :
- une couche avant 101 de contact comportant une seule couche matérialisant un quadrillage sensiblement plan de plusieurs cellules unitaires pleines 102, reliées les unes aux autres par des bras laissant apparaitre des espaces libres entre lesdites cellules unitaires pleines 102. Ces cellules unitaires pleines 102 ont les mêmes dimensions au sein de ladite couche avant 101, et ont chacune une forme rectangulaire. Chacune de ces cellules unitaires pleines 102 peut posséder une ouverture centrale 103. Avantageusement, l'épaisseur de cette couche avant 101 est inférieure ou égale à 5mm. En se référant à la figure 5, les cellules unitaires pleines 102 de la couche avant 101 sont reliées entre elles par des bras avant 140 non rectilignes, pouvant par exemple présenter une courbure ou au moins une pliure. De cette manière, lorsque la couche avant 101 se déforme, sous l'effet par exemple d'une personne qui s'assoit sur le coussin 100, ces bras avant 140 peuvent facilement accompagner cette déformation en se déployant. Lorsque les bras avant 140 vont se déployer, ils vont avoir tendance à adopter un profil rectiligne allongé et apporter de la souplesse, notamment dans le plan contenant les cellules unitaires pleines, et
- une couche intermédiaire 104 molle comportant une seule couche matérialisant un quadrillage de plusieurs cellules unitaires creuses 105, reliées les unes aux autres par des bras laissant apparaitre des espaces libres entre lesdites cellules unitaires creuses 105, ladite couche intermédiaire 104 étant au contact de la couche avant 101 de telle sorte que chaque cellule unitaire pleine 102 vienne en correspondance et en appui contre une cellule unitaire creuse 105. Les cellules unitaires creuses 105 de la couche intermédiaire 104 sont de forme elliptique ou trapézoïdales et ont des dimensions inférieures ou égales à celles des cellules unitaires pleines 102 de la couche avant 101 de contact. Préférentiellement, l'épaisseur de cette couche intermédiaire 104 est inférieure ou égale à 5mm, et
- une couche arrière 106 de confort constituant le cœur du coussin 100 et comportant une superposition d'au moins deux couches de cellules ajourées 107, ladite couche arrière 106 étant au contact de la couche intermédiaire 104 de sorte que ladite couche intermédiaire 104 soit comprise entre la couche avant 101 de contact et la couche arrière 106. Chacune des cellules ajourées 107 a la forme d'un octaèdre tronqué ou correspondant au comportement mécanique souhaité. En se référant à la figure 3, la couche arrière 106 de confort comprend une première face qui est au contact de la couche intermédiaire 104 molle et une deuxième face 108 qui est sensiblement parallèle à ladite première face et qui est destinée à venir au contact d'une surface de l'appui-tête 11 du siège 1, ladite deuxième face 108 possédant des excroissances 109 de matière de manière à accroitre la surface de contact entre le coussin 100 et la surface dudit appui-tête 11. Il est important que cette deuxième face 108 présente une tenue mécanique homogène, afin que le coussin 100 ne se déforme pas de façon anarchique et ne s'use prématurément. Ces excroissances 109 qui peuvent revêtir une multiplicité de formes, ont pour seul objectif d'accroitre la surface de contact entre la deuxième face 108 du coussin 100 et la surface de l'appui-tête 11. Cette deuxième face 108 peut faire apparaitre une gorge 110 creuse, et délimitée par une paroi 111 continue de forme sensiblement hémicylindrique ou rectangulaire et destinée à loger un matériau d'accrochage, telle que par exemple une bande Velcro. Cette gorge 110 creuse est obtenue par impression 3D, préférentiellement selon le même mode de réalisation que le reste du coussin 100 et donc réalisée simultanément, et ne résulte donc pas de l'insertion d'une paroi rapportée dans la couche arrière 106. Cette gorge 110 est fermée et dessine un cadre de forme sensiblement rectangulaire qui est proche du bord périphérique de ladite couche arrière 106, et
- une couche de maintien 112 de la couche avant 101 de contact, de la couche intermédiaire 104 molle et de la couche arrière 106 de confort. En effet, ces trois couches 101, 104, 106 constitutives du coussin 100 possèdent des contours de même dimension, ladite couche de maintien 112 apparaissant sous la forme d'une bande entourant lesdites trois couches superposées 101, 104, 106. La largeur de cette bande constituant la couche de maintien 112 correspond à la hauteur de superposition des trois couches 101, 104, 106 constitutives du coussin 100. Cette couche de maintien 112 contribue à octroyer au coussin 100 une bonne tenue d'ensemble, et à circonscrire de potentielles extensions accidentelles des trois couches 101, 104, 106 constitutives du coussin 100 à l'intérieur dudit coussin 100. Ces extensions sont inhérentes à la fabrication du coussin 100 et ne sont pas recherchées. La couche de maintien 112 retient ces extensions afin de rendre le coussin plus doux au toucher. Préférentiellement, cette couche de maintien 112 est constituée d'une multiplicité de mailles 130 ayant chacune avantageusement une forme de losange.

Les différentes couches 101, 104, 106, 112 du coussin obtenues par impression 3D présentent chacune des ouvertures, des passages, des orifices et des espaces libres dans le but d'alléger au maximum le coussin 100 et pour faciliter le dépoussiérage dudit coussin 100 à la fin de son procédé de fabrication par impression 3D. En effet, à la fin dudit procédé, de la poussière reste stockée dans le coussin 100 et il est fondamental de pouvoir l'évacuer simplement et rapidement.

En se référant à la figure 4, un deuxième mode de réalisation d'un coussin 100 selon l'invention est destiné à venir se fixer à l'assise 2 du siège 1. Les caractéristiques structurelles de ce deuxième mode de réalisation sont analogues à celles du premier mode de réalisation précédemment décrit, seule la forme générale du coussin 100 change. Ce deuxième mode de réalisation, illustre le fait qu'une conception paramétrique en vue d'une fabrication par impression 3D, permet d'attribuer n'importe quel type de forme audit coussin 100. Ce deuxième mode de réalisation comprend un tronçon 113 central plan, de forme sensiblement rectangulaire, et deux tronçons latéraux 114, 115 relevés prenant naissance sur deux bords parallèles du tronçon central 113, ledit tronçon central 113 présentant une échancrure avant 116. Ce deuxième mode de réalisation d'un coussin 100 selon l'invention est destiné à venir se fixer sur l'assise 2 du siège 1 précédemment décrit.

Au moins un coussin 100 selon l'invention est fixé à chaque élément constitutif de l'assise 2 et du dossier 3 et destiné à venir au contact d'une partie du corps d'un pilote qui serait assis sur ledit siège 1. Une conception paramétrique en vue d'une impression 3D permet de donner à chaque coussin 100 une forme adaptée à la forme de l'élément du siège contre lequel ledit coussin est destiné à venir se fixer.

Une conception paramétrique en vue d'une impression 3D permet de donner à chaque coussin 100 une morphologie et une réponse mécanique globale adaptées à la morphologie de l'utilisateur.

## Revendications

1. Coussin (100) monolithique, comprenant au moins trois couches distinctes (101, 104, 106) :
- une couche avant (101) de contact, et
- une couche intermédiaire (104), et
- une couche arrière (106) de confort constituant le cœur du coussin (100) et comportant une superposition d'au moins deux couches de cellules ajourées (107), ladite couche arrière (106) étant au contact de la couche intermédiaire (104) de sorte que ladite couche intermédiaire (104) soit comprise entre la couche avant (101) et la couche arrière (106),
**caractérisé en ce que** :
la couche avant (101) comporte une seule couche matérialisant un quadrillage de plusieurs cellules unitaires pleines (102), reliées les unes aux autres par des bras avant (140) laissant apparaitre des espaces libres entre lesdites cellules unitaires pleines (102), et
la couche intermédiaire (104) comporte une seule couche possédant un quadrillage de plusieurs cellules unitaires creuses (105), reliées les unes aux autres par des bras laissant apparaitre des espaces libres entre lesdites cellules unitaires creuses (105), ladite couche intermédiaire (104) étant au contact de la couche avant (101) et reliée à la couche avant par des bras de telle sorte que chaque cellule unitaire pleine (102) vienne en correspondance et en appui contre une cellule unitaire creuse (105).

2. Coussin selon la revendication 1, **caractérisé en ce que** les cellules unitaires pleines (102) de la couche avant (101) ont une forme en quadrilatère.

3. Coussin selon la revendication 2, **caractérisé en ce que** les cellules unitaires pleines (102) de la couche avant (101) présentent chacune une ouverture centrale (103).

4. Coussin selon l'une quelconque des revendications 2 ou 3, **caractérisé en ce que** les cellules unitaires creuses (105) de la couche intermédiaire (104) sont de forme elliptique et ont des dimensions inférieures ou égales à celles des cellules unitaires pleines (102) de la couche avant (101).

5. Coussin selon l'une quelconque des revendications 1 à 4, **caractérisé en ce que** la couche arrière (106) de confort comprend des cellules ajourées (107) en forme d'octaèdre tronqué.

6. Coussin selon l'une quelconque des revendications 1 à 5, **caractérisé en ce que** la couche arrière (106) de confort comprend une première face qui est au contact de la couche intermédiaire (104) molle et une deuxième face (108) qui est sensiblement parallèle à ladite première face et qui est destinée à venir au contact d'une surface extérieure, ladite deuxième face (108) possédant des excroissances (109) de matière pour accroitre la surface de contact entre le coussin (100) et ladite surface extérieure.

7. Coussin selon la revendication 6, **caractérisé en ce que** la deuxième face (108) possède une gorge creuse (110) délimitée par une paroi (111) continue et destinée à l'insertion d'un matériau d'accrochage.

8. Coussin selon l'une quelconque des revendications 1 à 7, **caractérisé en ce que** la couche avant (101) de contact, la couche intermédiaire (104) molle et la couche arrière (106) de confort possèdent des contours de même dimension, et **en ce que** le coussin (100) comporte une couche de maintien (112) sous la forme d'une bande latérale entourant les trois couches superposées (101, 104, 106) constitutives du coussin (100), la largeur de ladite bande correspondant à la hauteur de superposition desdites trois couches constitutives (101, 104, 106) dudit coussin (100).

9. Coussin selon la revendication 8, **caractérisé en ce que** la couche de maintien (112) est constituée d'une multiplicité de mailles (130).

10. Coussin selon l'une quelconque des revendications 1 à 9, **caractérisé en ce que** les bras avant (140) reliant les cellules unitaires pleines (102) de la couche avant (101) présentent une courbure ou au moins une pliure, de façon à pouvoir se déployer lorsque ladite couche avant (101) est déformée.

11. Siège de véhicule comprenant une assise (2) et un dossier (3), **caractérisé en ce qu'**au moins un coussin (100) conforme à l'une quelconque des revendications 1 à 9, est fixé à ladite assise (2) et audit dossier (3).

12. Véhicule comprenant au moins un siège conforme à la revendication 11.

## Patentansprüche

1. Monolithisches Polster (100), umfassend mindestens drei unterschiedliche Schichten (101, 104, 106):
- eine vordere Kontaktschicht (101), und
- eine Zwischenschicht (104), und
- eine hintere Komfortschicht (106), die den Kern des Polsters (100) bildet und eine Überlagerung von mindestens zwei Schichten aus durchbrochenen Zellen (107) beinhaltet, wobei die hintere Schicht (106) in Kontakt mit der Zwischenschicht (104) ist, so dass die Zwischenschicht (104) zwischen der vorderen Schicht (101) und der hinteren Schicht (106) enthalten ist,
**dadurch gekennzeichnet, dass**:
die vordere Schicht (101) eine einzige Schicht beinhaltet, die ein Gitter aus mehreren gefüllten Einzelzellen (102) bildet, die durch vordere Arme (140) miteinander verbunden sind, was freie Räume zwischen den gefüllten Einzelzellen (102) erscheinen lässt, und
die Zwischenschicht (104) eine einzige Schicht beinhaltet, die ein Gitter aus mehreren hohlen Einzelzellen (105) besitzt, die durch Arme miteinander verbunden sind, was freie Räume zwischen den hohlen Einzelzellen (105) erscheinen lässt, wobei die Zwischenschicht (104) mit der vorderen Schicht (101) in Kontakt ist und mit der vorderen Schicht durch Arme verbunden ist, so dass jede gefüllte Einzelzelle (102) in Übereinstimmung mit einer und in Anlage an eine hohle Einzelzelle (105) gelangt.

2. Polster nach Anspruch 1, **dadurch gekennzeichnet, dass** die gefüllten Einzelzellen (102) der vorderen Schicht (101) eine viereckige Form haben.

3. Polster nach Anspruch 2, **dadurch gekennzeichnet, dass** die gefüllten Einzelzellen (102) der vorderen Schicht (101) jeweils eine zentrale Öffnung (103) aufweisen.

4. Polster nach einem der Ansprüche 2 oder 3, **dadurch gekennzeichnet, dass** die hohlen Einzelzellen (105) der Zwischenschicht (104) elliptisch geformt sind und Maße haben, die kleiner oder gleich denen der gefüllten Einzelzellen (102) der vorderen Schicht (101) sind.

5. Polster nach einem der Ansprüche 1 bis 4, **dadurch gekennzeichnet, dass** die hintere Komfortschicht (106) durchbrochene Zellen (107) in Form eines Oktaederstumpfes umfasst.

6. Polster nach einem der Ansprüche 1 bis 5, **dadurch gekennzeichnet, dass** die hintere Komfortschicht (106) eine erste Seite, die mit der weichen Zwischenschicht (104) in Kontakt ist, und eine zweite Seite (108), die im Wesentlichen parallel zu der ersten Seite ist und die dazu bestimmt ist, mit einer Außenfläche in Kontakt zu gelangen, umfasst, wobei die zweite Seite (108) Materialvorsprünge (109) besitzt, um die Kontaktfläche zwischen dem Poster (100) und der Außenfläche zu vergrößern.

7. Polster nach Anspruch 6, **dadurch gekennzeichnet, dass** die zweite Seite (108) eine hohle Nut (110) besitzt, die durch eine durchgehende Wand (111) begrenzt wird und zum Einfügen eines Befestigungsmaterials bestimmt ist.

8. Polster nach einem der Ansprüche 1 bis 7, **dadurch gekennzeichnet, dass** die vordere Kontaktschicht (101), die weiche Zwischenschicht (104) und die hintere Komfortschicht (106) maßgleiche Konturen besitzen und dass das Polster (100) eine Halteschicht (112) in Form eines die drei überlagerten Schichten (101, 104, 106), die das Kissen (100) bilden, umgebenden seitlichen Streifens beinhaltet, wobei die Breite des Streifens der Überlagerungshöhe der drei Teilschichten (101, 104, 106) des Polsters (100) entspricht.

9. Polster nach Anspruch 8, **dadurch gekennzeichnet, dass** die Halteschicht (112) aus einer Mehrzahl von Maschen (130) besteht.

10. Polster nach einem der Ansprüche 1 bis 9, **dadurch gekennzeichnet, dass** die die gefüllten Einzelzellen (102) der vorderen Schicht (101) verbindenden vorderen Arme (140) eine Krümmung oder mindestens eine Biegung aufweisen, so dass sie sich entfalten können, wenn die vordere Schicht (101) verformt wird.

11. Fahrzeugsitz, der eine Sitzfläche (2) und eine Rückenlehne (3) umfasst, **dadurch gekennzeichnet, dass** mindestens ein Polster (100) nach einem der Ansprüche 1 bis 9 an der Sitzfläche (2) und an der Rückenlehne (3) befestigt ist.

12. Fahrzeug, das mindestens einen Sitz nach Anspruch 11 umfasst.

## Claims

1. Monolithic cushion (100) comprising at least three distinct layers (101, 104, 106):
- a front contact layer (101), and
- an intermediate layer (104), and
- a rear comfort layer (106) constituting the core of the cushion (100) and comprising a stack of at least two layers of open cells (107), said rear layer (106) being in contact with the intermediate layer (104) such that said intermediate layer (104) is comprised between the front layer (101) and the rear layer (106),
**characterized in that**:
the front layer (101) comprises a single layer forming a lattice of several solid unit cells (102), connected to one another by front arms (140) leaving open spaces between said solid unit cells (102), and
the intermediate layer (104) comprises a single layer having a lattice of several hollow unit cells (105), connected to one another by arms leaving open spaces between said hollow unit cells (105), said intermediate layer (104) being in contact with the front layer (101) and connected to the front layer by arms such that each solid unit cell (102) corresponds to and bears against a hollow unit cell (105).

2. Cushion according to Claim 1, **characterized in that** the solid unit cells (102) of the front layer (101) have a quadrilateral shape.

3. Cushion according to Claim 2, **characterized in that** the solid unit cells (102) of the front layer (101) each have a central opening (103).

4. Cushion according to any one of Claims 2 or 3, **characterized in that** the hollow unit cells (105) of the intermediate layer (104) are elliptical in shape and have dimensions smaller than or equal to those of the solid unit cells (102) of the front layer (101).

5. Cushion according to any one of Claims 1 to 4, **characterized in that** the rear comfort layer (106) comprises open cells (107) having the shape of a truncated octahedron.

6. Cushion according to any one of Claims 1 to 5, **characterized in that** the rear comfort layer (106) comprises a first face that makes contact with the soft intermediate layer (104) and a second face (108) that is substantially parallel to said first face and that is intended to come into contact with an outer surface, said second face (108) having protuberances (109) of material for increasing the contact area between the cushion (100) and said outer surface.

7. Cushion according to Claim 6, **characterized in that** the second face (108) has a hollow groove (110) delimited by a continuous wall (111) and intended for the insertion of an attachment material.

8. Cushion according to any one of Claims 1 to 7, **characterized in that** the front contact layer (101), the soft intermediate layer (104) and the rear comfort layer (106) have contours of the same size, and **in that** the cushion (100) comprises a holding layer (112) in the form of a lateral strip surrounding the three superposed constituent layers (101, 104, 106) of the cushion (100), the width of said strip corresponding to the stacked height of said three constituent layers (101, 104, 106) of said cushion (100).

9. Cushion according to Claim 8, **characterized in that** the holding layer (112) consists of a plurality of meshes (130).

10. Cushion according to any one of Claims 1 to 9, **characterized in that** the front arms (140) connecting the solid unit cells (102) of the front layer (101) have a curvature or at least a fold, to enable deployment when said front layer (101) is deformed.

11. Vehicle seat comprising a seat portion (2) and a backrest (3), **characterized in that** at least one cushion (100) according to any one of Claims 1 to 9 is fastened to said seat portion (2) and to said backrest (3).

12. Vehicle comprising at least one seat according to Claim 11.
